(19) Europäisches Patentamt
European Patent Office
Office européen des brevets

(11) EP 3 214 158 B1

(12) EUROPEAN PATENT SPECIFICATION

(45) Date of publication and mention of the grant of the patent:
**18.03.2026 Bulletin 2026/12**

(21) Application number: **17150305.5**

(22) Date of filing: **08.08.2008**

(51) International Patent Classification (IPC):
***C10M 143/04*** $^{(2006.01)}$ ***C08F 210/06*** $^{(2006.01)}$
***C08L 23/04*** $^{(2006.01)}$ ***C08L 23/08*** $^{(2025.01)}$
***C08L 23/14*** $^{(2006.01)}$ *C10N 20/04* $^{(2006.01)}$
*C10N 30/00* $^{(2006.01)}$ *C10N 30/02* $^{(2006.01)}$
*C08L 23/0807* $^{(2025.01)}$

(52) Cooperative Patent Classification (CPC):
(C-Sets available)
**C10M 143/04; C08L 23/142;** C08L 23/04;
C08L 23/0815; C08L 2205/06; C10M 2205/022;
C10M 2205/024; C10M 2205/026; C10M 2205/028;
C10N 2020/04; C10N 2030/02; C10N 2030/68
(Cont.)

(54) **IMPROVED OLEFINIC COPOLYMER COMPOSITIONS FOR VISCOSITY MODIFICATION OF MOTOR OIL**

VERBESSERTE OLEFINCOPOLYMERZUSAMMENSETZUNGEN ZUR VISKOSITÄTSMODIFIKATION VON MOTORÖL

COMPOSITIONS DE COPOLYMÈRE OLÉFINIQUE AMÉLIORÉES POUR MODIFIER LA VISCOSITÉ D’UNE HUILE DE MOTEUR

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**06.09.2017 Bulletin 2017/36**

(62) Document number(s) of the earlier application(s) in accordance with Art. 76 EPC:
**08797513.2 / 2 328 996**

(73) Proprietors:
- **ExxonMobil Chemical Patents Inc.**
  **Baytown, TX 77520 (US)**
- **Chevron Oronite Company LLC**
  **San Ramon, CA 94583 (US)**

(72) Inventors:
- **Ravishankar, Periagaram S.**
  **Kingwood, TX 77345 (US)**
- **Nass, Kirk A.**
  **San Francisco, CA 94131 (US)**

(74) Representative: **Zanoli, Enrico et al**
**Zanoli & Giavarini S.p.A.**
**Via Melchiorre Gioia, 64**
**20125 Milano (IT)**

(56) References cited:
**US-A- 3 509 056 US-A1- 2004 210 013**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/142, C08L 2666/06**

**Description**

FIELD OF INVENTION

Embodiments of the present invention generally relate to methods and compositions for improved viscosity lube oils. More particularly, embodiments of the present invention relate to viscosity modifiers for lubricating oils and methods for making same.

BACKGROUND

The viscosity of lubricating oils is dependent on temperature. Lubricant oil formulations generally contain viscosity index ("VI") improving components to modify the rheological behavior to increase the lubricant viscosity, and promote a more constant viscosity over the range of temperatures over which the lubricant is used.

The viscosity index has been used to measure the rate of change of viscosity of a fluid in relation to temperature. In general, the higher the viscosity index, the smaller is the relative change in viscosity with temperature. The VI improver or viscosity modifier is used to reduce the temperature dependency of the viscosity of the lubricant compositions so that the lubricant compositions can be used over a wide temperature range. In other words, the VI improvers prevent the lubricant compositions from becoming too thin at a high temperature, e.g., hot summer temperatures, and too viscous at a low temperature, e.g., cold winter temperatures. Some known VI improvers include polymethacrylates, olefin copolymers, such as ethylene-propylene copolymers and ethylene-propylene diene-modified copolymers (EPDMs), and hydrogenated styrenic block copolymers such as styrene-ethylene/butylene-styrene copolymer (SEBS).

In recent years, ethylene/$\alpha$-olefin copolymers have been widely used as viscosity modifiers, exhibiting the effect of improving viscosity index for the purpose of decreasing the temperature dependence of the lubricant's viscosity. See, for example, U.S. Patent Nos. 6,589,920; 5,391,617; 7,053,153; and 5,374,700. Lubricating oils lose fluidity at low temperatures because wax components therein tend to solidify to crystals.

Higher ethylene-content copolymers efficiently promote oil thickening, shear stability and low temperature viscometrics, while lower ethylene-content copolymers are added for the purpose of lowering the oil pour point. Blends of amorphous and semicrystalline ethylene propylene copolymers are also known for lubricant oil formulations. The combination of two such ethylene-propylene copolymers allows for increased thickening efficiency, shear stability, low temperature viscosity performance and pour point. See, for example, U.S. Pat. No. 5,391,617, and EP 0 638,611. However, it has been discovered that the ethylene component of these ethylene based copolymers has a tendency to interact with waxes in the oil gel at high levels. Further ethylene-propylene copolymers are disclosed in US 2004/210013 A.

There is a need, therefore, for new VI improvers or viscosity modifiers to reduce the temperature dependency of the viscosity of the lubricant compositions with improved low temperature performance and for lubricant compositions can be used over a wide temperature range.

SUMMARY OF THE INVENTION

Lube oil compositions and methods for making the same are provided. In at least one specific embodiment not encompassed by the wording of the claims, the lube oil composition includes a base oil, and at least one propylene-based polymer comprising 60 wt% to 98 wt% propylene derived units and 2 wt% to 40 wt% units derived from one or more other alpha olefins. The propylene-based polymer can have a triad tacticity of 90% or more, a heat of fusion of less than 80 J/g, a weight average molecular weight (Mw) as measured by GPC of from 70,000 to 250,000, and a MWD of 2.0 to 2.5.

In at least one other specific embodiment not encompassed by the wording of the claims, the lubricating oil composition includes: of from 0.5 wt% to 15 wt%, based on the total weight of the lubricating oil composition, of at least one propylene-based polymer comprising 70 wt% to 95 wt% propylene derived units and 5 wt% to 30 wt% units derived from one or more other alpha olefins; from 60 wt% to 98 wt%, based on the total weight of the lubricating oil composition, a base oil; of from 0.1 wt% to 20 wt%, based on the total weight of the lubricating oil composition, one or more dispersants; and of from 0.1 wt% to 10 wt%, based on the total weight of the lubricating oil composition, one or more pour point depressants. The propylene-based polymer has a heat of fusion of less than 80 J/g, a weight average molecular weight (Mw) as measured by GPC of from 120,000 to 150,000, and a MWD of 2.0 to 2.5.

In at least one other specific embodiment not encompassed by the wording of the claims, the lubricating oil composition includes a base oil and at least one propylene-based polymer comprising 80 wt% to 88 wt% propylene derived units and 12 wt% to 20 wt% units derived from one or more other alpha olefins. The propylene-based polymer has a triad tacticity of 90% or more, a heat of fusion of less than 80 J/g, a weight average molecular weight (Mw) as measured by GPC of from 120,000 to 250,000; and a MWD of 2.0 to 2.5. The propylene-based polymer is present in an amount of from 0.5 wt% to 15 wt%, based on the total weight of the lubricating oil composition.

In at least one other specific embodiment, the lubricating oil composition includes: of from 0.5 wt% to 15 wt%,

based on the total weight of the lubricating oil composition, of at least one propylene-based polymer comprising 84.5 wt% to 88 wt% propylene derived units and units derived from 12 wt% to 15.5 wt% ethylene, from 60 wt% to 98 wt%, based on the total weight of the lubricating oil composition, a base oil; of from 0.1 wt% to 20 wt%, based on the total weight of the lubricating oil composition, one or more dispersants; and of from 0.1 wt% to 10 wt%, based on the total weight of the lubricating oil composition, one or more pour point depressants. The propylene-based polymer has a triad tacticity of 90% or more, a heat of fusion of less than 80 J/g, a weight average molecular weight (Mw) as measured by GPC of from 120,000 to 250,000; and a MWD of 2.0 to 2.5.

## DETAILED DESCRIPTION

A detailed description will now be provided. Further, as is understood by one of skill in the art, each of the descriptions of an embodiment and claims herein may be modified by addition of unrecited elements or may be limited to only those elements recited herein.

Propylene-based polymers are used as viscosity index improvers. Surprisingly, these polymers were found to have acceptable properties as viscosity index improvers with good shear stability and viscosity characteristics. More particularly, it has been found that propylene-based polymers having low $\alpha$-olefin content that, when used as VI improvers, promote oil thickening, shear stability and low temperature viscometrics, while lowering the oil pour point. These propylene-based VI improvers reduce the temperature dependency of the viscosity of the lubricant compositions so that the lubricant compositions can be used over a wide temperature range without solids or gel formations.

### *Propylene-Based Polymer*

The propylene-based polymer can be one or more propylene-$\alpha$-olefin-copolymers, propylene-$\alpha$-olefin-diene terpolymers, or propylene-diene copolymers. For simplicity and ease of description, however, the terms "propylene-based polymer" and "PCP" are used interchangeably herein and refer to one or more propylene-$\alpha$-olefin-copolymers, propylene-$\alpha$-olefin-diene terpolymers and propylene-diene copolymers having 84.5 wt% to 88 wt% propylene derived units. Further, for ease of description, when referring to the PCPs of the present invention, one may interchangeably refer to the PCP being made up of multiple monomers (i.e., propylene and ethylene, according to the invention) or units derived from monomers (i.e., propylene-derived units and/or units derived from $\alpha$-olefins, not encompassed by the wording of the claims).

In one embodiment, the propylene-based polymer can be prepared by polymerizing propylene with one or more $\alpha$-olefins. The one or more $\alpha$-olefins may comprise ethylene, or one or more $C_4$-$C_{20}$ $\alpha$-olefin or a combination of ethylene and one or more $C_4$-$C_{20}$ $\alpha$-olefin. In a preferred embodiment the one or more $\alpha$-olefins comprises ethylene.

In another embodiment not according to the wording of the claims, the propylene-based polymer can be prepared by polymerizing propylene with ethylene and/or one or more $C_4$-$C_{20}$ $\alpha$-olefin, or a combination of ethylene and one or more $C_4$-$C_{20}$ $\alpha$-olefin and one or more dienes. The one or more dienes can be conjugated or non-conjugated. Preferably, the one or more dienes are non-conjugated.

In another embodiment, the propylene-based polymer can be prepared by polymerizing propylene with one or more dienes. In yet another embodiment, the propylene-based polymer can be prepared by polymerizing propylene with ethylene and/or at least one $C_4$-$C_{20}$ $\alpha$-olefin, or a combination of ethylene and at least one $C_4$-$C_{20}$ $\alpha$-olefin and one or more dienes. The one or more dienes can be conjugated or non-conjugated. Preferably, the one or more dienes are non-conjugated.

The comonomers can be linear or branched. Preferred linear comonomers include ethylene or $C_4$ to $C_8$ $\alpha$-olefins, more preferably ethylene, 1-butene, 1-hexene, and 1-octene, even more preferably ethylene or 1-butene. Preferred branched comonomers include 4-methyl-1-pentene, 3-methyl-1-pentene, and 3,5,5-trimethyl-1-hexene. In one or more embodiments, the comonomer can include styrene.

Illustrative dienes can include but are not limited to 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; vinyl norbornene (VNB); dicyclopendadiene (DCPD), and combinations thereof. Preferably, the diene is ENB.

Preferred methods and catalysts for producing the propylene-based polymers are found in publications U.S. 2004/0236042 and WO 2005/049672 and in U.S. Patent No. 6,881,800. Pyridine amine complexes, such as those described in WO 2003/040201 are also useful to produce the propylene-based polymers useful herein. The catalyst can involve a fluxional complex, which undergoes periodic intramolecular re-arrangement so as to provide the desired interruption of stereoregularity as in U.S. 6,559,262. The catalyst can be a stereorigid complex with mixed influence on propylene insertion, *see* Rieger EP 1 070 087. The catalyst described in EP 1 614 699 could also be used for the production of backbones suitable for the invention.

The propylene-based polymer according to the invention has an average propylene content on a weight percent

basis of from 84.5 wt% to 88 wt% propylene based on the weight of the polymer, the balance comprises units derived from ethylene.

In another embodiment not encompassed by the wording of the claims, the balance comprises units derived from one or more dienes and optionally one or more of the α-olefins described previously. In one or more embodiments above or elsewhere herein, the alphaolefin is ethylene, butene, hexene or octene. In other embodiments, two alpha-olefins are present, preferably ethylene and one of butene, hexene or octene.

In the diene containing embodiments not encompassed by the wording of the claims, the propylene-based polymer comprises about 0.2 wt% to about 24 wt%, units derived from a non-conjugated diene based on the weight of the polymer, more preferably from about 0.5 wt% to about 12 wt%, more preferably about 0.6 wt% to about 8 wt%, and more preferably about 0.7 wt% to about 5 wt%. In other embodiments, the diene content ranges from about 0.2 wt% to about 10 wt%, more preferably from about 0.2 to about 5 wt%, more preferably from about 0.2 wt% to about 4 wt%, preferably from about 0.2wt% to about 3.5 wt%, preferably from about 0.2wt% to about 3.0 wt%, and preferably from about 0.2 wt% to about 2.5 wt% based on the weight of the polymer. In one or more embodiments above or elsewhere herein, the propylene-based polymer comprises units derived from ENB in an amount of from about 0.5 to about 4 wt%, more preferably from about 0.5 to about 2.5 wt%, and more preferably from about 0.5 to about 2.0 wt%.

In other diene containing embodiments not encompassed by the wording of the claims, the propylene-based polymer preferably comprises propylene-derived units and diene-derived units in one or more of the ranges described above with the balance comprising one or more $C_2$ and/or $C_4$-$C_{20}$ olefins. In general, this will amount to the propylene-based polymer preferably comprising from about 5 to about 40 wt% of one or more $C_2$ and/or $C_4$-$C_{20}$ olefins based the weight of the polymer. When $C_2$ and/or a $C_4$-$C_{20}$ olefins are present the combined amounts of these olefins in the polymer is preferably at least about 5 wt% and falling within the ranges described herein. Other preferred ranges for the one or more α-olefins include from about 5 wt% to about 35 wt%, more preferably from about 5 wt% to about 30 wt%, more preferably from about 5 wt% to about 25 wt%, more preferably from about 5 wt% to about 20 wt%, more preferably from about 5 to about 17 wt% and more preferably from about 5 wt% to about 16 wt%.

The propylene-based polymer can have a g' index of 0.95 or greater measured at the weight average molecular weight (Mw) of the polymer using isotactic polypropylene as the baseline, all of which can be determined by size exclusion chromatography, e.g., 3D SEC, also referred to as GPC-3D as described herein.

In one or more embodiments above or elsewhere herein, the propylene-based polymer can have a Mw of 120,000 to 250,000.

In one or more embodiments above or elsewhere herein, the propylene-based polymer can have a Mn of about 2,500 to about 2,500,000 g/mole, more preferably a Mn of about 5,000 to about 500,000, more preferably a Mn of about 10,000 to about 250,000, more preferably a Mn of about 25,000 to about 200,000, wherein Mn is determined as described herein.

In one or more embodiments above or elsewhere herein, the propylene-based polymer can have a Mz of about 10,000 to about 7,000,000 g/mole, more preferably a Mz of about 50,000 to about 1,000,000, more preferably a Mz of about 80,000 to about 700,000, more preferably a Mz of about 100,000 to about 500,000, wherein Mz is determined as described herein.

The molecular weight distribution index (MWD = (Mw/Mn)), sometimes referred to as a "polydispersity index" (PDI), of the propylene-based polymer is from 2.0 to 2.5. Techniques for determining the molecular weight (Mn and Mw) and molecular weight distribution (MWD) can be found in U.S. Pat. No. 4,540,753 and references cited therein, in Macromolecules, 1988, volume 21, p 3360 (Verstrate et al.), and references cited therein, and in accordance with the procedures disclosed in U.S. Patent No. 6,525,157, column 5, lines 1-44.

In one or more embodiments above or elsewhere herein, the propylene-based polymer can have a g' index value of 0.95 or greater, preferably at least 0.98, with at least 0.99 being more preferred, wherein g' is measured at the Mw of the polymer using the intrinsic viscosity of isotactic polypropylene as the baseline. For use herein, the g' index is defined as:

$$g' = \frac{\eta_b}{\eta_l}$$

(1) where $\eta_b$ is the intrinsic viscosity of the propylene-based polymer and $\eta_l$ is the intrinsic viscosity of a linear polymer of the same viscosity-averaged molecular weight ($M_v$) as the propylene-based polymer. $\eta_l = KM_v^{\alpha}$, K and $\alpha$ were measured values for linear polymers and should be obtained on the same instrument as the one used for the g' index measurement.

In one or more embodiments above or elsewhere herein, the propylene-based polymer can have a density of about 0.85 g/cm$^3$ to about 0.92 g/cm$^3$, more preferably, about 0.87 g/cm$^3$ to 0.90 g/cm$^3$, more preferably about 0.88 g/cm$^3$ to about 0.89 g/cm$^3$ at room temperature as measured per the ASTM D-1505 test method.

In one or more embodiments above or elsewhere herein, the propylene-based polymer can have a melt flow rate (MFR, 2.16 kg weight @ 230°C), equal to or greater than 0.2 g/10 min as measured according to the ASTM D-1238 test method as modified (described below). Preferably, the MFR (2.16 kg @ 230°C) is from about 0.5 g/10 min to about 200 g/10 min and more preferably from about 1 g/10 min to about 100 g/10 min. In an embodiment, the propylene-based polymer has an MFR upper limit of about 200 g/10 min, about 150 g/10 min, about 100 g/10 min, about 75 g/10 min, about 50 g/10 min, about 30 g/10 min, about 25 g/10 min, or about 20 g/10 min and a lower limit of about 0.1 g/10 min, about 0.5 g/10 min, about 1 g/10 min, about 2 g/10 min, about 3 g/10 min, about 4 g/10 min, about 5 g/10 min, about 8 g/10 min, or about 10 g/10 min. In another embodiment, the propylene-based polymer has an MFR of 0.5 g/10 min to 200 g/10 min, preferably from 2 g/10 min to 30 g/10 min, more preferably from 3g/10 min to 21 g/10min, more preferably from 5 g/10 min to 30 g/10 min, more preferably 10 g/10 min to 30 g/10 min, more preferably 10 g/10 min to about 25 g/10 min, or more preferably 2 g/10 min to about 10 g/10 min.

The propylene-based polymer can have a Mooney viscosity ML (1+4)@125°C, as determined according to ASTM D1646, of less than 100, more preferably less than 75, even more preferably less than 60, most preferably less than 30. In one or more embodiments above or elsewhere herein, the Mooney viscosity can range from a low of about 1, 5, 10, or 15 to a high of about 30, 60, 75 or 100.

In one or more embodiments above or elsewhere herein, the propylene-based polymer can have a heat of fusion (Hf) determined according to the DSC procedure described later, which is less than 80 J/g. Preferred propylene-based polymers and compositions can be characterized in terms of both their melting points (Tm) and heats of fusion, which properties can be influenced by the presence of comonomers or steric irregularities that hinder the formation of crystallites by the polymer chains.

The crystallinity of the propylene-based polymer can also be expressed in terms of percentage of crystallinity (i.e. % crystallinity). In certain embodiments above or elsewhere herein, the propylene-based polymer is substantially amorphous characterized in that it has 0 % crystallinity as determined according to the DSC procedure described below. In other embodiments above or elsewhere herein, the propylene-based polymer has a % crystallinity of from 0.5 % to 40%, preferably 1% to 30%, more preferably 5% to 25% wherein % crystallinity is determined according to the DSC procedure described below. In another embodiment, the propylene-based polymer preferably has a crystallinity of less than 40%, preferably about 0.25% to about 25%, more preferably from about 0.5% to about 22%, and most preferably from about 0.5% to about 20%. As disclosed above, the thermal energy for the highest order of polypropylene is estimated at 189 J/g (i.e., 100% crystallinity is equal to 209 J/g.).

In addition to this level of crystallinity, the propylene-based polymer preferably has a single broad melting transition. However, the propylene-based polymer can show secondary melting peaks adjacent to the principal peak, but for purposes herein, such secondary melting peaks are considered together as a single melting point, with the highest of these peaks (relative to baseline as described herein) being considered the melting point of the propylene-based polymer.

The propylene-based polymer preferably has a melting point (measured by DSC) of equal to or less than 100°C, preferably less than 90°C, preferably less than 80°C, more preferably less than or equal to 75°C, preferably from about 25°C to about 80°C, preferably about 25°C to about 75°C, more preferably about 30°C to about 65°C.

Heat of fusion, % crystallinity and melting temperature of the propylene-based polymer can be determined, for example by a Differential Scanning Calorimetry (DSC) procedure using the following steps:

About 0.5g is placed between two sheets of Mylar™ film ("mylar"). The mylar/polymer/mylar "sandwich" is then placed on top of a small cavity mold with no top cover sheet. The dimensions of the cavity mold are 1 "X2"X~0.020". The mold and sample are then placed in a heated hydraulic press. The press temperature is usually set between 150°C to 200°C. The platens of the press are closed and a force of about 15 tons is maintained for about 3-5 minutes. The platens are then opened while still at the above mentioned prescribed temperature and the mylar/polymer/mylar "sandwich" is removed from the mold. The sample, mylar/polymer/mylar "sandwich" is allowed to anneal for no less than 24 hours, and no greater than 48 hours by hanging in air at room temperature (actual time is to be noted). After the annealing period, the pressed pad is removed from the mylar and cut crosswise then folded over onto itself, forming a double layer. From this double layer a circular disk is cut out, using a leather punch or other paper punch device. Five samples will be prepared. The sample weights will be recorded, and should be no less than 8 mg and no greater than 12 mg. The samples are then placed in individual 10 micro-liter aluminum pans. Unvented aluminum lids will be crimped on top of each pan, insuring good contact between the samples and the pans. The sample pans are then placed in a calibrated DSC instrument with an empty pan with lid on the reference side and run using the following parameters, under N2 purge gas (~20ml/min). An empty pan will be run in addition to the five samples. Automatic subtraction of the empty pan run from the sample runs will be enabled. The DSC heat history will be as follows. Cool the sample from room temperature to -75 C as quickly as the DSC is capable. Hold at -75 C for three minutes. Ramp the temperature at a heating rate of 20°C/minute to a temperature sufficiently high to completely melt the sample. The thermograms generated from this step are used to determine melting point, specific heat and degree of crystallinity. The output data from DSC consists of time (sec), temperature (° C.), and heat flow (watts). Each of the five sample melting thermograms will be analyzed as follows. First, the total heat flow is divided by the sample mass to obtain a specific heat flow (units: W/g). Second, a baseline is constructed and subtracted

from the specific heat flow to give baseline-subtracted heat flow. For the analyses discussed here, a straight-line baseline will be used. The lower temperature baseline limit will be above the glass transition temperature, but below the temperature at which the sample begins to melt. The upper baseline temperature limit will be a temperature 5 to 10° C. above the completion of the melting endotherm. The following three parameters will then be determined separately for each of the five runs:

(1) Melting Point - The peak melting temperature is the temperature between the lower and upper baseline settings which has the greatest baseline-subtracted heat flow.
(2) The specific heat of melting, ∆hm (J/g) is the area under the melting endotherm obtained by integrating the baseline-subtracted heat flow versus time between the baseline limits;
(3) The percent crystallinity is determined by dividing the specific heat of melting by 189 J/g and multiplying by 100.

The sample melting temperature, specific heat, and percent crystallinity will be the average over the five runs after excluding outliers. An outlier will be as defined by the method prescribed by Dixon (Biometrics, Vol. 9, #1 March, 1953, 74-89) using a 95% confidence level.

*Triad Tacticity*

The triad tacticity of a polymer is the relative tacticity of a sequence of three adjacent propylene units, a chain consisting of head to tail bonds, expressed as a binary combination of m and r sequences. It is usually expressed for the propylene-based polymers described as the ratio of the number of units of the specified tacticity to all of the propylene triads in the polymer.

The propylene-based polymer can have a triad tacticity of 90% or more.

The triad tacticity (mm fraction) of a propylene-based polymer can be determined from a $^{13}$C NMR spectrum and the following formula:

$$\text{mm Fraction} = \frac{\text{PPP(mm)}}{\text{PPP(mm)} + \text{PPP(mr)} + \text{PPP(rr)}}$$

where PPP(mm), PPP(mr) and PPP(rr) denote peak areas derived from the methyl groups of the second units in the following three propylene unit chains consisting of head-to-tail bonds:

PPP(mm):

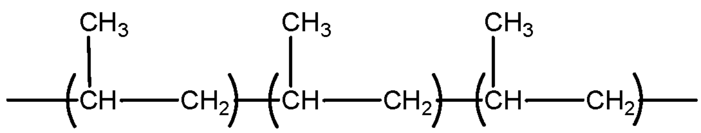

PPP(mr):

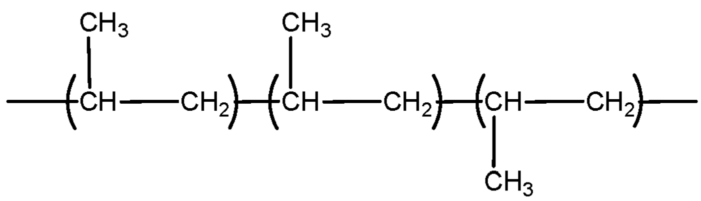

PPP(rr):

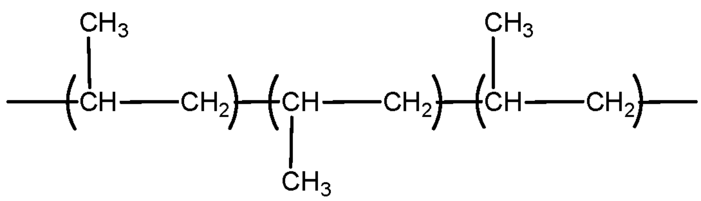

The 13C NMR spectrum relating to the methyl carbon region (19-23 parts per million (ppm)) can be divided into a first region (21.2-21.9 ppm), a second region (20.3-21.0 ppm) and a third region (19.5-20.3 ppm). Each peak in the spectrum can be assigned with reference to an article in the journal Polymer, Volume 30 (1989), page 1350. In the first region, the methyl group of the second unit in the three propylene unit chain represented by PPP (mm) resonates. In the second region, the methyl group of the second unit in the three propylene unit chain represented by PPP (mr) resonates, and the methyl group (PPE-methyl group) of a propylene unit whose adjacent units are a propylene unit and an ethylene

unit resonates (in the vicinity of 20.7 ppm). In the third region, the methyl group of the second unit in the three propylene unit chain represented by PPP (rr) resonates, and the methyl group (EPE-methyl group) of a propylene unit whose adjacent units are ethylene units resonates (in the vicinity of 19.8 ppm). Additional details and information can be found in U.S. Patent No. 5,504,172.

Examples of 2,1 insertion are shown in structures 1 and 2 below.

Structure (1):

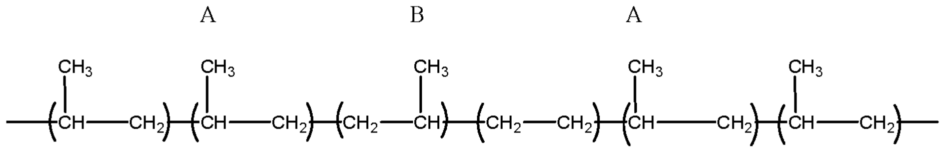

Structure (2):

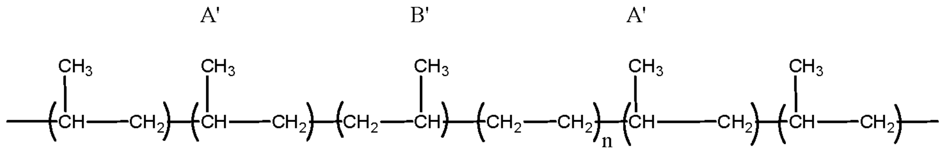

where n ≥ 2.

A peak of the carbon A and a peak of the carbon A' appear in the second region. A peak of the carbon B and a peak of the carbon B' appear in the third region, as described above. Among the peaks which appear in the first to third regions, peaks which are not based on the 3 propylene unit chain consisting of head-to-tail bonds are peaks based on the PPE-methyl group, the EPE-methyl group, the carbon A, the carbon A', the carbon B, and the carbon B'.

The peak area based on the PPE-methyl group can be evaluated by the peak area of the PPE-methine group (resonance in the vicinity of 30.8 ppm), and the peak area based on the EPE-methyl group can be evaluated by the peak area of the EPE-methine group (resonance in the vicinity of 33.1 ppm). The peak area based on the carbon A can be evaluated by twice as much as the peak area of the methine carbon (resonance in the vicinity of 33.9 ppm) to which the methyl group of the carbon B is directly bonded; and the peak area based on the carbon A' can be evaluated by the peak area of the adjacent methine carbon (resonance in the vicinity of 33.6 ppm) of the methyl group of the carbon B'. The peak area based on the carbon B can be evaluated by the peak area of the adjacent methine carbon (resonance in the vicinity of 33.9 ppm); and the peak area based on the carbon B' can be also evaluated by the adjacent methine carbon (resonance in the vicinity of 33.6 ppm).

By subtracting these peak areas from the total peak areas of the second region and the third region, the peak areas based on the three propylene unit chains (PPP(mr) and PPP(rr)) consisting of head-to-tail bonds can be obtained. Thus, the peak areas of PPP(mm), PPP(mr) and PPP(rr) can be evaluated, and the triad tacticity of the propylene unit chain consisting of head-to-tail bonds can be determined.

Similarly, the peak areas based on the 3 propylene units-chains (PPP(mr) and PPP(rr)) consisting of head-to-tail bonds can be obtained by subtracting the peak areas for the error in propylene insertions (both 2,1 and 1,3) from peak areas from the total peak areas of the second region and the third region, Thus, the peak areas of PPP(mm), PPP(mr) and PPP(rr) can be evaluated, and hence the triad tacticity of the propylene unit chain consisting of head-to-tail bonds can be determined.

The proportion of the 2,1-insertions to all of the propylene insertions in a propylene elastomer can be calculated by the following formula as described in Polymer, vol. 30 (1989), p.1350.

Proportion of inversely inserted unit based on 2,1-insertion (%) is equal to:

$$\frac{0.25I\alpha\beta(structure(i)) + 0.5I\alpha\beta(structure(ii))}{I\alpha\alpha + I\alpha\beta(structure(ii)) + 0.5(I\alpha\gamma + I\alpha\beta(structure(i)) + I\alpha\delta)} x100$$

Naming of the peaks in the above formula was made in accordance with a method by Carman, et al. in the journal Rubber Chemistry and Technology, volume 44 (1971), page 781, where Iαδ denotes a peak area of the αδ+ secondary carbon peak. It is difficult to separate the peak area of Iαβ (structure (i)) from Iαβ (structure (ii)) because of overlapping of the peaks. Carbon peaks having the corresponding areas can be substituted therefore.

The measurement of the 1,3 insertion requires the measurement of the □βγ peak. Two structures can contribute to the βγ peak: (1) a 1,3 insertion of a propylene monomer; and (2) from a 2,1-insertion of a propylene monomer followed by

two ethylene monomers. This peak is described as the 1.3 insertion peak and we use the procedure described in U.S. Patent No. 5,504,172, which describes this βγ peak and understand it to represent a sequence of four methylene units. The proportion (%) of the amount of these errors was determined by dividing the area of the βγ peak (resonance in the vicinity of 27.4 ppm) by the sum of all the methyl group peaks and ½ of the area of the βγ peak, and then multiplying the resulting value by 100. If an α-olefin of three or more carbon atoms is polymerized using an olefin polymerization catalyst, a number of inversely inserted monomer units are present in the molecules of the resultant olefin polymer. In polyolefins prepared by polymerization of α-olefins of three or more carbon atoms in the presence of a chiral metallocene catalyst, 2,1-insertion or 1,3-insertion takes place in addition to the usual 1,2-insertion, such that inversely inserted units such as a 2,1-insertion or a 1,3-insertion are formed in the olefin polymer molecule (see, Macromolecular Chemistry Rapid Communication, Volume 8, page 305 (1987), by K. Soga, T. Shiono, S. Takemura and W. Kaminski).

Preferably, the proportion of inversely inserted propylene units of the propylene-based polymer, based on the 2,1-insertion of a propylene monomer in all propylene insertions, as measured by 13C NMR, is greater than 0.5%, or greater than 0.6%. The proportion of inversely inserted propylene units of the propylene-based polymer, based on the 1,3-insertion of a propylene monomer, as measured by 13C NMR, is greater than 0.05%, or greater than 0.06%, or greater than 0.07%, or greater than 0.08%, or greater than 0.085%.

*Blends*

In one or more embodiments, the propylene-based polymer can be blended with other polymeric viscosity index modifiers, such as polybutenes, polymers of styrene with butadiene or isoprene that may optionally be hydrogenated or a combination of butadiene or isoprene, ester based viscosity index modifiers such as esters of styrene/maleic anhydride polymers, esters of styrene/maleic anhydride/acrylate terpolymers, and polymethacrylates. Examples for such viscosity index modifiers for such blends include acrylate-or methacrylate-containing copolymers or copolymers of styrene and an ester of an unsaturated carboxylic acid such as styrene/maleic ester (typically prepared by esterification of a styrene/-maleic anhydride copolymer).

In one or more embodiments, the propylene-based polymer can itself be a blend of discrete random propylene-based polymers. Such blends can include ethylene-based polymers and propylene-based polymers, or at least one of each such ethylene-based polymers and propylene-based polymers. The number of propylene-based polymers can be three or less, more preferably two or less. In embodiments where the propylene-based polymer is a blend of discrete random propylene-based polymers, it may further be blended with other polymeric viscosity index modifiers, such as polybutenes, polymers of styrene with butadiene or isoprene or a combination of butadiene or isoprene, ester based viscosity index modifiers such as esters of styrene/maleic anhydride polymers, esters of styrene/maleic anhydride/acrylate terpolymers, and polymethacrylates. Examples for such viscosity index modifiers for such blends include acrylate- or methacrylate-containing copolymers or copolymers of styrene and an ester of an unsaturated carboxylic acid such as styrene/maleic ester (typically prepared by esterification of a styrene/maleic anhydride copolymer).

In one or more embodiments above or elsewhere herein, the propylene-based polymer can include a blend of two propylene-based polymers differing in the olefin content, the diene content, or both.

In another embodiment, the propylene-based polymers can include copolymers prepared according to the procedures in WO 02/36651. Likewise, the propylene-based polymer can include polymers consistent with those described in WO 2003/040201, WO 2003/040202, WO 2003/040095, WO 2003/040201, WO 2003/040233, and/or WO 2003/040442. Additionally, the propylene-based polymer can include polymers consistent with those described in EP 1 233 191, and U.S. 6,525,157, along with suitable propylene homo- and copolymers described in U.S. 6,770,713 and U.S. Patent Application Publication 2005/215964. The propylene-based polymer can also include one or more polymers consistent with those described in EP 1 614 699 or EP 1 017 729.

*Grafted (Functionalized) Backbone*

In one or more embodiments not according to the wording of the claims, the propylene-based polymer can be grafted (i.e. "functionalized") using one or more grafting monomers. As used herein, the term "grafting" denotes covalent bonding of the grafting monomer to a polymer chain of the propylene-based polymer.

The grafting monomer can be or include at least one ethylenically unsaturated carboxylic acid or acid derivative, such as an acid anhydride, ester, salt, amide, imide, acrylates or the like. Illustrative monomers include but are not limited to acrylic acid, methacrylic acid, maleic acid, fumaric acid, itaconic acid, citraconic acid, mesaconic acid, maleic anhydride, 4-methyl cyclohexene-1,2- dicarboxylic acid anhydride, bicyclo(2.2.2)octene-2,3-dicarboxylic acid anhydride, 1,2,3,4,5,8,9,10-octahydronaphthalene-2,3-dicarboxylic acid anhydride, 2-oxa-1,3-diketospiro(4.4)nonene, bicyclo(2.2.1)heptene-2,3-dicarboxylic acid anhydride, maleopimaric acid, tetrahydrophthalic anhydride, norbornene-2,3-dicarboxylic acid anhydride, nadic anhydride, methyl nadic anhydride, himic anhydride, methyl himic anhydride, and 5-methylbicyclo(2.2.1)heptene-2,3- dicarboxylic acid anhydride. Other suitable grafting monomers include methyl acrylate

and higher alkyl acrylates, methyl methacrylate and higher alkyl methacrylates, acrylic acid, methacrylic acid, hydroxymethyl methacrylate, hydroxyl-ethyl methacrylate and higher hydroxy- alkyl methacrylates and glycidyl methacrylate. Maleic anhydride is a preferred grafting monomer.

In one or more embodiments, the grafted propylene based polymer comprises from about 0.5 to about 10 wt% ethylenically unsaturated carboxylic acid or acid derivative, more preferably from about 0.5 to about 6 wt%, more preferably from about 0.5 to about 3 wt%; in other embodiments from about 1 to about 6 wt%, more preferably from about 1 to about 3 wt%. In a preferred embodiment wherein the graft monomer is maleic anhydride, the maleic anhydride concentration in the grafted polymer is preferably in the range of about 1 to about 6 wt%, preferably at least about 0.5 wt% and highly preferably about 1.5 wt%.

Styrene and derivatives thereof such as paramethyl styrene, or other higher alkyl substituted styrenes such as t-butyl styrene can be used as a charge transfer agent in presence of the grafting monomer to inhibit chain scissioning. This allows further minimization of the beta scission reaction and the production of a higher molecular weight grafted polymer.

*Preparing Grafted Propylene-Based Polymers*

The grafted propylene-based polymer can be prepared using conventional techniques. For example, the graft polymer can be prepared in solution, in a fluidized bed reactor, or by melt grafting. A preferred grafted polymer can be prepared by melt blending in a shear-imparting reactor, such as an extruder reactor. Single screw but preferably twin screw extruder reactors such as co-rotating intermeshing extruder or counter-rotating non-intermeshing extruders but also co-kneaders such as those sold by Buss are especially preferred.

In one or more embodiments, the grafted polymer can be prepared by melt blending the ungrafted propylene-based polymer with a free radical generating catalyst, such as a peroxide initiator, in the presence of the grafting monomer. The preferred sequence for the grafting reaction includes melting the propylene-based polymer, adding and dispersing the grafting monomer, introducing the peroxide and venting the unreacted monomer and byproducts resulting from the peroxide decomposition. Other sequences can include feeding the monomers and the peroxide pre-dissolved in a solvent.

Illustrative peroxide initiator include but are not limited to: diacyl peroxides such as benzoyl peroxide; peroxyesters such as tert-butylperoxy benzoate, tert-butylperoxy acetate, OO-tert-butyl-O-(2- ethylhexyl)monoperoxy carbonate; peroxyketals such as n-butyl-4,4-di-(tert-butyl peroxy) valerate; and dialkyl peroxides such as 1,1-bis(tertbutylperoxy) cyclohexane, 1,1-bis(tert-butylperoxy)-3,3,5-trimethylcyclohexane, 2,2-bis(tert-butylperoxy)butane, dicumylperoxide, tert-butylcumylperoxide, Di-(2-tert-butylperoxyisopropyl-(2))benzene, di-tert-butylperoxide (DTBP), 2,5-dimethyl-2,5-di(tert-butylperoxy)hexane, 2,5-dimethyl-2,5-di(tert-butylperoxy)hexyne, 3,3,5,7,7-pentamethyl 1,2,4-trioxepane; and the like.

*Base Oil*

The base oil can be or include natural or synthetic oils of lubricating viscosity, whether derived from hydrocracking, hydrogenation, other refining processes, unrefined processes, or re-refined processes. The base oil can be or include used oil. Natural oils include animal oils, vegetable oils, mineral oils and mixtures thereof. Synthetic oils include hydrocarbon oils, silicon-based oils, and liquid esters of phosphorus-containing acids. Synthetic oils may be produced by Fischer-Tropsch gas-to-liquid synthetic procedure as well as other gas-to-liquid oils.

In one embodiment, the base oil is or includes a polyalphaolefin (PAO) including a PAO-2, PAO-4, PAO-5, PAO-6, PAO-7 or PAO-8 (the numerical value relating to Kinematic Viscosity at 100°C). Preferably, the polyalphaolefin is prepared from dodecene and/or decene. Generally, the polyalphaolefin suitable as an oil of lubricating viscosity has a viscosity less than that of a PAO-20 or PAO-30 oil.

In one or more embodiments, the base oil can be defined as specified in the American Petroleum Institute (API) Base Oil Interchangeability Guidelines. For example, the base oil can be or include an API Group I, II, III, IV, V oil or mixtures thereof.

In one or more embodiments, the base oil can include oil or blends thereof conventionally employed as crankcase lubricating oils. For example, suitable base oils can include crankcase lubricating oils for spark-ignited and compression-ignited internal combustion engines, such as automobile and truck engines, marine and railroad diesel engines, and the like. Suitable base oils can also include those oils conventionally employed in and/or adapted for use as power transmitting fluids such as automatic transmission fluids, tractor fluids, universal tractor fluids and hydraulic fluids, heavy duty hydraulic fluids, power steering fluids and the like. Suitable base oils can also be or include gear lubricants, industrial oils, pump oils and other lubricating oils.

In one or more embodiments, the base oil can include not only hydrocarbon oils derived from petroleum, but also include synthetic lubricating oils such as esters of dibasic acids; complex esters made by esterification of monobasic acids, polyglycols, dibasic acids and alcohols; polyolefin oils, etc. Thus, the lubricating oil compositions described can be suitably incorporated into synthetic base oils such as alkyl esters of dicarboxylic acids, polyglycols and alcohols; polyalpha-olefins;

polybutenes; alkyl benzenes; organic esters of phosphoric acids; polysilicone oils; etc. The lubricating oil composition can also be utilized in a concentrate form, such as from 1 wt% to 49 wt% in oil, e.g., mineral lubricating oil, for ease of handling, and may be prepared in this form by carrying out the reaction of the invention in oil as previously described.

*Conventional Oil Additives*

The lubricating oil composition can optionally contain one or more conventional additives, such as, for example, pour point depressants, antiwear agents, antioxidants, other viscosity-index improvers, dispersants, corrosion inhibitors, anti-foaming agents, detergents, rust inhibitors, friction modifiers, and the like.

Corrosion inhibitors, also known as anti-corrosive agents, reduce the degradation of the metallic parts contacted by the lubricating oil composition. Illustrative corrosion inhibitors include phosphosulfurized hydrocarbons and the products obtained by reaction of a phosphosulfurized hydrocarbon with an alkaline earth metal oxide or hydroxide, preferably in the presence of an alkylated phenol or of an alkylphenol thioester, and also preferably in the presence of carbon dioxide. Phosphosulfurized hydrocarbons are prepared by reacting a suitable hydrocarbon such as a terpene, a heavy petroleum fraction of a $C_2$ to $C_6$ olefin polymer such as polyisobutylene, with from 5 wt% to 30 wt% of a sulfide of phosphorus for 1/2 to 15 hours, at a temperature in the range of 66°C to 316°C. Neutralization of the phosphosulfurized hydrocarbon may be effected in the manner taught in U.S. Pat. No. 1,969,324.

Oxidation inhibitors, or antioxidants, reduce the tendency of mineral oils to deteriorate in service, as evidenced by the products of oxidation such as sludge and varnish-like deposits on the metal surfaces, and by viscosity growth. Such oxidation inhibitors include alkaline earth metal salts of alkylphenolthioesters having C5 to C12 alkyl side chains, e.g., calcium nonylphenate sulfide, barium octylphenate sulfide, dioctylphenylamine, phenylalphanaphthylamine, phosphosulfurized or sulfurized hydrocarbons, etc.

Other oxidation inhibitors or antioxidants useful in this invention include oil-soluble copper compounds, such as described in U.S. Pat. No. 5,068,047.

Friction modifiers serve to impart the proper friction characteristics to lubricating oil compositions such as automatic transmission fluids. Representative examples of suitable friction modifiers are found in U.S. Pat. No. 3,933,659, which discloses fatty acid esters and amides; U.S. Pat. No. 4,176,074 which describes molybdenum complexes of polyisobutenyl succinic anhydride-amino alkanols; U.S. Pat. No. 4,105,571 which discloses glycerol esters of dimerized fatty acids; U.S. Pat. No. 3,779,928 which discloses alkane phosphonic acid salts; U.S. Pat. No. 3,778,375 which discloses reaction products of a phosphonate with an oleamide; U.S. Pat. No. 3,852,205 which discloses S-carboxyalkylene hydrocarbyl succinimide, S-carboxyalkylene hydrocarbyl succinamic acid and mixtures thereof; U.S. Pat. No. 3,879,306 which discloses N(hydroxyalkyl)alkenyl-succinamic acids or succinimides; U.S. Pat. No. 3,932,290 which discloses reaction products of di-(lower alkyl) phosphites and epoxides; and U.S. Pat. No. 4,028,258 which discloses the alkylene oxide adduct of phosphosulfurized N-(hydroxyalkyl) alkenyl succinimides. Preferred friction modifiers are succinate esters, or metal salts thereof, of hydrocarbyl substituted succinic acids or anhydrides and thiobis-alkanols such as described in U.S. Pat. No. 4,344,853.

Dispersants maintain oil insolubles, resulting from oxidation during use, in suspension in the fluid, thus preventing sludge flocculation and precipitation or deposition on metal parts. Suitable dispersants include high molecular weight N-substituted alkenyl succinimides, the reaction product of oil-soluble polyisobutylene succinic anhydride with ethylene amines such as tetraethylene pentamine and borated salts thereof. High molecular weight esters (resulting from the esterification of olefin substituted succinic acids with mono or polyhydric aliphatic alcohols) or Mannich bases from high molecular weight alkylated phenols (resulting from the condensation of a high molecular weight alkylsubstituted phenol, an alkylene polyamine and an aldehyde such as formaldehyde) are also useful as dispersants.

Pour point depressants ("ppd"), otherwise known as lube oil flow improvers, lower the temperature at which the fluid will flow or can be poured. Any suitable pour point depressant known in the art can be used. For example, suitable pour point depressants include, but are not limited to, one or more C8 to C18 dialkylfumarate vinyl acetate copolymers, polymethyl methacrylates, alkylmethacrylates and wax naphthalene.

Foam control can be provided by any one or more anti-foamants. Suitable ant-foamants include polysiloxanes, such as silicone oils and polydimethyl siloxane.

Anti-wear agents reduce wear of metal parts. Representatives of conventional antiwear agents are zinc dialkyldithiophosphate and zinc diaryldithiosphate, which also serves as an antioxidant.

Detergents and metal rust inhibitors include the metal salts of sulphonic acids, alkyl phenols, sulfurized alkyl phenols, alkyl salicylates, naphthenates and other oil soluble mono- and dicarboxylic acids. Highly basic (viz, overbased) metal sales, such as highly basic alkaline earth metal sulfonates (especially Ca and Mg salts) are frequently used as detergents.

Compositions when containing these conventional additives are typically blended into the base oil in amounts which are effective to provide their normal attendant function. Thus, typical formulations can include, in amounts by weight, a VI improver (0.01% to 12%); a corrosion inhibitor (0.01% to 5%); an oxidation inhibitor (0.01% to 5%); depressant (0.01%

to 5%); an anti-foaming agent (0.001% to 3%); an anti-wear agent (0.001% to 5%); a friction modifier (0.01% to5%); a detergent/rust inhibitor (0.01% to 10%); and a base oil.

When other additives are used, it may be desirable, although not necessary, to prepare additive concentrates comprising concentrated solutions or dispersions of the viscosity index improver (in concentrate amounts hereinabove described), together with one or more of the other additives, such a concentrate denoted an "additive package," whereby several additives can be added simultaneously to the base oil to form a lubricating oil composition. Dissolution of the additive concentrate into the lubricating oil may be facilitated by solvents and by mixing accompanied with mild heating, but this is not essential. The additive-package will typically be formulated to contain the viscosity index improver and optional additional additives in proper amounts to provide the desired concentration in the final formulation when the additive-package is combined with a predetermined amount of base lubricant. Thus, the products of the present invention can be added to small amounts of base oil or other compatible solvents along with other desirable additives to form additive-packages containing active ingredients in collective amounts of typically from 2.5 to 90%, preferably from 5 to 75%, and still more preferably from 8 to 50% by weight additives in the appropriate proportions with the remainder being base oil. The final formulations may use typically about 10 wt% of the additive-package with the remainder being base oil.

In at least one specific embodiment not encompassed by the wording of the claims, the lubricating oil composition can include: one or more propylene-based polymers in an amount of from 0.1 wt% to 20 wt%; one or more base oils in an amount of from 1 wt% to 99 wt%; one or more dispersants in an amount of from 0.01 wt% to 25 wt%; and optionally one or more other additives in an amount of from 0.01 wt% to 20 wt%, based on total weight of the lubricating oil composition. Such weight percentages are based on the total weight of the oil composition.

In at least one specific embodiment not encompassed by the wording of the claims, the lubricating oil composition can contain one or more propylene-based polymers in amounts of from 1.0 wt% to 20 wt%; or 2.0 wt% to 18 wt%; 3.0 wt% to 15 wt%; 5 wt% to 14 wt%; or 5.0 wt% to 10 wt%. In one or more embodiments, the amount of one or more propylene-based polymers in the lubricating oil composition can range from a low of about 0.1 wt%, 0.5 wt%, or 1 wt% to a high of about 10 wt%, 15 wt%, or 20wt%. In one or more embodiments, the amount of one or more propylene-based polymers in the lubricating oil composition can range from a low of about 0.1 wt%, 2.0 wt%, or 5 wt% to a high of about 12 wt%, 17 wt%, or 19 wt%. In one or more embodiments, the amount of one or more propylene-based polymers in the lubricating oil composition can be about 1 wt%, about 2 wt%, about 5 wt%, about 7 wt%, about 9 wt%, or about 10 wt%. In one or more embodiments, the amount of one or more propylene-based polymers in the lubricating oil composition can be about 0.5 wt%, about 0.6 wt%, about 0.7 wt%, about 0.8 wt%, about 0.9 wt%, about 1.0 wt%; about 1.2 wt%; about 1.4 wt%; about 1.6 wt%; about 1.8 wt%; or about 2.0 wt%. Such weight percentages are based on the total weight of the oil composition.

In at least one specific embodiment, the lubricating oil composition can contain one or more propylene-based polymers in an amount of from 0.5 wt% to to 15 wt%; and one or more base oils in an amount of from 60 wt% to 98 wt%. Such weight percentages are based on the total weight of the oil composition.

Thickening efficiency is a measure of the thickening ability of the polymer in oil, and is defined as: TE = 2/c × ln((kv of polymer + oil)/(kv of oil))/ln(2) where c is the concentration of the polymer. The lubricating oil composition can have a thickening efficiency of 1.5 to 2.5.

The shear stability index (SSI) is an indication of the resistance of polymers to permanent mechanical shear degradation in an engine. The SSI can be determined by passing a polymer-oil solution for 30 cycles through a high shear Bosch diesel injector according to the procedures listed in ASTM D6278. The SSI of a polymer can be calculated from the viscosity of the oil without polymer and the initial and sheared viscosities of the polymer-oil solution using:

$$SSI=100x(v_{(polymer+oil),FRESH}-v_{(polymer+oil),SHEARED} / (v_{(polymer+oil),FRESH}- v_{(oil),FRESH})$$

where v is the kinematic viscosity measured at 100° C. according to ASTM D445. In order to meet the viscosity requirements for various grades of oil and other performance criteria imposed by automotive engine manufacturers and industry associations, the measured SSI of commercial Viscosity Index Improver polymers are generally between 24 and 50 SSI. The lubricating oil composition has a SSI of 20 to 60, preferably 20 to 50.

In one or more embodiments, a fully formulated lubricating oil composition of the present invention remains essentially free flowing when exposed to low temperature cycles ranging from a lower limit of -5, -8, -10, -12, -15, -18 or -20 deg C to an upper limit of 5, 8, 10, 12, 15, 18 or 20 degC. "Essentially free flowing" means having a negligible and/or undetectable change in flow ability (viscosity) when poured out of a container. In other embodiments, the lubricating oil composition exhibits less than about 15 %, less than about 12 %, less than about 10 %, less than about 5 %, less than about 3 %, less than about 1 %, less than about 0.5 %, less than about 0.25 % or less than about 0.1 % change in flow ability based on the initial flow ability of the lubricating oil formulation containing the propylene-based polymer of the present invention.

With respect to all ranges (upper and/or lower) described herein, any lower limit value may be combined with any upper limit value to the extent such combination is not violative of a basic premise of the range described (*i.e.,* lower and upper ranges of weight percent of components present in a material may not be combined to the extent they would result in

more than 100 w% in the overall material).

Embodiment A not encompassed by the wording of the claims: A lubricating oil composition comprising: at least one propylene-based polymer comprising 60 wt% to 98 wt% propylene derived units and 2 wt% to 40 wt% units derived from one or more other alpha olefins, the propylene-based polymer having: a triad tacticity of 90% or more, a heat of fusion of less than 80 J/g, a weight average molecular weight (Mw) as measured by GPC of from 70,000 to 250,000, and a MWD of 2.0 to 2.5; and a base oil.

Embodiment B not encompassed by the wording of the claims: The lubricating oil composition of embodiment A, wherein the propylene-based polymer comprises 70 wt% to 95 wt% propylene derived units and 5 wt% to 30 wt% units derived from one or more other alpha olefins.

Embodiment C not encompassed by the wording of the claims: The lubricating oil composition of embodiments A or B, wherein the propylene-based polymer comprises 75 wt% to 95 wt% propylene derived units and 5 wt% to 25 wt% units derived from one or more other alpha olefins.

Embodiment D not encompassed by the wording of the claims: The lubricating oil composition of any embodiments A to C, wherein the propylene-based polymer comprises 80 wt% to 90 wt% propylene derived units and 5 wt% to 20 wt% units derived from one or more other alpha olefins.

Embodiment E not encompassed by the wording of the claims: The lubricating oil composition of any embodiments A to D, wherein the propylene-based polymer comprises 80 wt% to 90 wt% propylene derived units and 10 wt% to 20 wt% units derived from one or more other alpha olefins.

Embodiment F not encompassed by the wording of the claims: The lubricating oil composition of any embodiments A to E, wherein the propylene-based polymer comprises 80 wt% to 88 wt% propylene derived units and 12 wt% to 20 wt% units derived from one or more other alpha olefins.

Embodiment G not encompassed by the wording of the claims: The lubricating oil composition of any embodiments A to F, wherein the alpha olefin is ethylene.

Embodiment H not encompassed by the wording of the claims: The lubricating oil composition of any embodiments A-G, wherein the alpha olefin is butene.

Embodiment I not encompassed by the wording of the claims: The lubricating oil composition of any embodiments A to H, wherein the one or more other alpha olefins comprises one or more $C_4$ to $C_{12}$ alpha-olefins.

Embodiment J not encompassed by the wording of the claims: The lubricating oil composition of any embodiments A to I, wherein the propylene derived units are isotactic.

Embodiment K not encompassed by the wording of the claims: The lubricating oil composition of any embodiments A to J, wherein the weight average molecular weight (Mw) is about 80,000 to about 200,000.

Embodiment L not encompassed by the wording of the claims: The lubricating oil composition of any embodiments A to K, wherein the weight average molecular weight (Mw) is about 100,000 to about 160,000.

Embodiment M not encompassed by the wording of the claims: The lubricating oil composition of any embodiments A to L, wherein the weight average molecular weight (Mw) is about 100,000 to about 150,000.

Embodiment N not encompassed by the wording of the claims: The lubricating oil composition of any embodiments A to M, wherein the MWD is of from 2.1 to 2.4.

Embodiment O not encompassed by the wording of the claims: The lubricating oil composition of any embodiments A to N, wherein the propylene-based polymer comprises of from 10 wt% to 20 wt% units derived from ethylene.

Embodiment P not encompassed by the wording of the claims: The lubricating oil composition of any embodiments A to O, wherein the propylene-based polymer has a MFR (2.16 kg, 230°C) as measured by ASTM-D1238 of from 3.0 g/10 min to about 21 g/10 min.

Embodiment Q not encompassed by the wording of the claims: The lubricating oil composition of any embodiments A to P, further comprising one or more dispersants.

Embodiment R not encompassed by the wording of the claims: The lubricating oil composition of any embodiments A to Q, further comprising one or more pour point depressants.

Embodiment S not encompassed by the wording of the claims: A lubricating oil composition comprising: of from 0.5 wt% to 15 wt%, based on the total weight of the lubricating oil composition, at least one propylene-based polymer comprising 70 wt% to 95 wt% propylene derived units and 5 wt% to 30 wt% units derived from one or more other alpha olefins, the propylene-based polymer having: a heat of fusion of less than 80 J/g, a weight average molecular weight (Mw) as measured by GPC of from 100,000 to 150,000, and a MWD of 2.0 to 2.5; of from 60 wt% to 98 wt%, based on the total weight of the lubricating oil composition, a base oil; of from 0.1 wt% to 20 wt%, based on the total weight of the lubricating oil composition, one or more dispersants; and of from 0.1 wt% to 10 wt%, based on the total weight of the lubricating oil composition, one or more pour point depressants.

Embodiment T not encompassed by the wording of the claims: The lubricating oil composition of embodiment S, wherein the propylene-based polymer has a MFR (2.16 kg, 230°C) as measured by ASTM-D1238 of from 3.0 g/10min to about 21 g/10 min.

Embodiment U not encompassed by the wording of the claims: The lubricating oil composition of embodiments S

or T, wherein the oil composition has a thickening efficiency of about 1.5 to 2.5, wherein the thickening efficiency is defined as: TE = 2/c × ln((kv of polymer + oil)/(kv of oil))/ln(2), where c is the concentration of the propylene-based polymer.

Embodiment V not encompassed by the wording of the claims: The lubricating oil composition of any embodiments S to U, wherein the oil composition has a shear stability index of about 20 to about 60.

Embodiment W not encompassed by the wording of the claims: A lubricating oil composition comprising: 0.5 wt% to 15 wt%, based on the total weight of the lubricating oil composition, at least one propylene-based polymer comprising 80 wt% to 88 wt% propylene derived units and 12 wt% to 20 wt% units derived from one or more other alpha olefins, the propylene-based polymer having: a triad tacticity of 90% or more, a heat of fusion of less than 80 J/g, a weight average molecular weight (Mw) as measured by GPC of from 100,000 to 250,000; and a MWD of 2.0 to 2.5; and a base oil.

Embodiment X not encompassed by the wording of the claims: The lubricating oil composition of embodiment W, wherein the propylene-based polymer is present in an amount of from 1.0 wt% to 10 wt%, based on the total weight of the lubricating oil composition.

Embodiment Y not encompassed by the wording of the claims: The lubricating oil composition of embodiment W or X, further comprising one or more dispersants.

Embodiment Z not encompassed by the wording of the claims: The lubricating oil composition of any embodiments W to Y, further comprising one or more pour point depressants.

Embodiment AA according to the invention: A lubricating oil composition comprising: of from 0.5 wt% to 15 wt%, based on the total weight of the lubricating oil composition, at least one propylene-based polymer comprising 84.5 wt% to 88 wt% propylene derived units and 12 wt% to 15.5 wt% units derived from one or more other alpha olefins, the propylene-based polymer having: a triad tacticity of 90% or more, a heat of fusion of less than 80 J/g, a weight average molecular weight (Mw) as measured by GPC of from 100,000 to 250,000; and a MWD of 2.0 to 2.5; and of from 60 wt% to 98 wt%, based on the total weight of the lubricating oil composition, a base oil; of from 0.1 wt% to 20 wt%, based on the total weight of the lubricating oil composition, one or more dispersants; and of from 0.1 wt% to 10 wt%, based on the total weight of the lubricating oil composition, one or more pour point depressants.

Embodiment BB not encompassed by the wording of the claims: The lubricating oil composition of embodiment AA, wherein the propylene-based polymer has a MFR (2.16 kg, 230°C) as measured by ASTM-D1238 of from 3.0 g/10min to about 21 g/10 min.

Embodiment CC according to the invention: The lubricating oil composition of embodiments AA or BB, wherein the oil composition has a thickening efficiency of about 1.5 to 2.5, wherein the thickening efficiency is defined as: TE = 2/c × ln((kv of polymer + oil)/(kv of oil))/ln(2), where c is the concentration of the propylene-based polymer.

Embodiment DD according to the invention: The lubricating oil composition of any embodiments AA to CC, wherein the oil composition has a shear stability index of about 20 to about 60.

Embodiment EE according to the invention: The lubricating oil composition of any embodiments AA to DD, wherein the oil composition has a shear stability index of about 20 to about 50.

Embodiment FF not encompassed by the wording of the claims: The lubricating oil composition of any embodiments AA to EE, wherein the oil composition has a shear stability index of about 24 to about 45.

EXAMPLES

The foregoing discussion can be further described with reference to the following non-limiting examples. Lubricating oil compositions containing at least one propylene-based polymer as a viscosity index improver in accordance with one or more embodiments described, are provided. Table 1 presents the propylene-based polymers that were used to formulate the lubricating oils in the following Examples. Such propylene-based polymers are available from ExxonMobil Chemical. Polymers PCP-04 and PCP-05 are according to the invention.

Table 1:

| Polymers | % C2 | MFR (g /10 min; ASTM-D1238 @ 230°C, 2.16 Kg) | Predicted molecular weight (Mw), |
|---|---|---|---|
| PCP-01 | 11 | 8 | 195,482 |
| PCP-02 | 16.3 | 3.1 | 245,078 |
| PCP-03 | 16.5 | 3.2 | 243,229 |
| PCP-04 | 14.5 | 20.2 | 156,736 |
| PCP-05 | 15.5 | 19.5 | 158,060 |

(continued)

| Polymers | % C2 | MFR (g /10 min; ASTM-D1238 @ 230°C, 2.16 Kg) | Predicted molecular weight (Mw), |
|---|---|---|---|
| PARATONE™ 8900* | 64.5 | 5 | |
| * PARATONE™ 8900 is commercially available from Chevron Oronite Company, LLC. | | | |

Table 2 summarizes the thickening efficiency (TE) and shear stability index (SSI) for the polymers of Table 1 in an API Group I oil. The polymer concentration for the SSI and TE measurements was 1.5 wt%. The API Group I oil had a kinematic viscosity of 6.062 cSt at 100°C.

As discussed above, thickening efficiency is a measure of the thickening ability of the polymer in oil, and is defined as: TE = 2/c × ln((kv of polymer + oil)/(kv of oil))/ln(2) where c is the concentration of the polymer. The SSI is an indication of the resistance of polymers to permanent mechanical shear degradation in an engine. The SSI is determined by passing a polymer-oil solution for 30 cycles through a high shear Bosch diesel injector according to the procedures listed in ASTM D6278. The SSI of a polymer is calculated from the viscosity of the oil without polymer and the initial and sheared viscosities of the polymer-oil solution using:

$$SSI=100x(v_{(polymer+oil),FRESH}-v_{(polymer+oil),SHEARED} / (v_{(polymer+oil),FRESH}- v_{(oil),FRESH})$$

where v is the kinematic viscosity measured at 100° C. according to ASTM D445.

Table 2

| | PCP. 1 | PCP. 2 | PCP. 3 | PCP. 4 | PCP. 5 | PARATONE™ 8900 |
|---|---|---|---|---|---|---|
| TE | 2.17 | 2.48 | 2.47 | 1.76 | 1.77 | 2.0 |
| SSI | 38.1 | 44.5 | 41.8 | 24.20 | 25.0 | 24.0 |

Five lubricating oil compositions (EX. 1-5) according to one or more embodiments described and one comparative oil composition (Comp. EX. 1) were prepared. To prepare the examples, the polymers were dissolved in an API Group I oil. The Group I oil composition was a blend of 150N and 400N API Group I base oils and had a kinematic viscosity, KV, at 100°C of about 6.5 cSt. A dispersant package from Chevron Oronite Company, LLC was added in various amounts as shown below in Table 3. Cold cranking stimulator (CCS) tests were then measured in accordance with ASTM D 5293 at -20°C. CCS is used to evaluate the cold cranking properties of lubricating oil at low temperatures.

Table 3

| | EX. 1 | EX. 2 | EX. 3 | EX. 4 | EX. 5 | Comp EX. 1 |
|---|---|---|---|---|---|---|
| Lube Oil, wt% | 90.13 | 90.26 | 90.41 | 89.86 | 89.82 | 90.01 |
| PCP-01, wt% | 0.92 | | | | | |
| PCP-02, wt% | | 0.79 | | | | |
| PCP-03, wt% | | | 0.63 | | | |
| PCP-04, wt% | | | | 1.18 | | |
| PCP-05, wt% | | | | | 1.22 | |
| PARATONE™ 8900 | | | | | | 1.06 |
| Dispersant Package, wt% | 8.96 | 8.96 | 8.96 | 8.96 | 8.96 | 8.93 |
| CCS*, cP | 6505 | 6648 | 6528 | 6869 | 3733 | 6670 |

Ten oil compositions (EX. 6-15) and a comparative oil composition (Comp. EX. 2) were then prepared with a pour point depressant ("PPD"). The PPD was added to the polymer and oil compositions to investigate the kinematic viscosity (KV), mini rotary viscometry (MRV), yield stress (YS), and pour point properties of the oil. The pour point depressant was either VISCOPLEX™ 1-330 or VISCOPLEX™ 1-3205, which are commercially available from Evonik RohMax Inc., Horsham, PA USA),

Table 4 summarize the oil compositions of Examples 6-15 and Comparative Example 2, each containing the pour point depressant and the resulting kinematic viscosity (KV), mini rotary viscometry (MRV), yield stress (YS), and pour point, and properties thereof. The viscosity (KV) was measured in accordance with ASTM D445. The pour point was measured in accordance with ASTM D-97. The MRV was measured in accordance with ASTM D4684, and evaluates the pumping performance of an oil pump at low temperatures. The yield stress was measured in accordance with ASTM D4684.

Table 4

| | EX. 6 | EX. 7 | EX. 8 | EX. 9 | EX. 10 | EX. 11 | EX. 12 | EX. 13 | EX. 14 | EX. 15 | Comp EX. 2 |
|---|---|---|---|---|---|---|---|---|---|---|---|
| Lube Oil, wt% | 89.45 | 89.68 | 89.58 | 89.81 | 89.73 | 89.96 | 89.19 | 89.42 | 89.15 | 89.38 | 89.56 |
| PCP-01 wt% | 0.91 | 0.91 | | | | | | | | | - |
| PCP-02 wt% | | | 0.78 | 0.78 | | | | | | | |
| PCP-03 wt% | | | | | 0.63 | 0.63 | | | | | |
| PCP-04 wt% | | | | | | | 1.17 | 1.17 | | | |
| PCP-05 wt% | | | | | | | | | 1.21 | 1.21 | |
| PARATONE™ 8900 | | | | | | | | | | | 1.05 |
| Dispersant, wt% | 8.89 | 8.91 | 8.89 | 8.91 | 8.89 | 8.91 | 8.89 | 8.91 | 8.89 | 8.91 | 8.89 |
| PPD, Viscoplex™ 1-3205, wt% | 0.75 | | 0.75 | | 0.75 | | 0.75 | | 0.75 | | |
| PPD, Viscoplex™ 1-330, wt% | | 0.50 | | 0.50 | | 0.50 | | 0.50 | | 0.50 | 0.5 |
| KV @100°C | 15.01 | 15.05 | 14.98 | 14.95 | 15.09 | 15.05 | 15.05 | 15.18 | 14.95 | 15.18 | 15.07 |
| MRV | 52169 | 35690 | 149224 | 85576 | 282389 | 146992 | 93770 | 68451 | 78307 | 57214 | Too large to measure |
| Yield Stress, Pa | 35 to 70 | 0 to 35 | 0 to 35 | 0 to 35 | 105 to 140 | 35 to 70 | 0 to 35 | 0 to 35 | 35 to 70 | 0 to 35 | n/a |
| Pour Point, °C | -23 | -27 | -27 | -27 | -27 | -27 | -26 | -25 | -25 | -29 | not available |

The data demonstrates that the propylene-based polymers having low $\alpha$-olefin content, i.e. about 15.5 wt% or less, surprisingly and unexpectedly promote oil thickening, shear stability and low temperature viscometrics. The propylene-based polymers also surprisingly and unexpectedly exhibited better low temperature performance of its lubricant compositions due to its low interaction with the wax in the oil.

For purposes of convenience, various specific test procedures are identified above for determining certain properties such as tensile set, percent elongation at break, Shore A Hardness, and toughness. However, when a person of ordinary skill reads this patent and wishes to determine whether a composition or polymer has a particular property identified in a claim, then any published or well-recognized method or test procedure can be followed to determine that property, although the specifically identified procedure is preferred. Each claim should be construed to cover the results of any of such procedures, even to the extent different procedures can yield different results or measurements. Thus, a person of ordinary skill in the art is to expect experimental variations in measured properties that are reflected in the claims. All numerical values can be considered to be "about" or "approximately" the stated value, in view of the nature of testing in general.

Certain embodiments and features have been described using a set of numerical upper limits and a set of numerical lower limits. It should be appreciated that ranges from any lower limit to any upper limit are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

## Claims

**1.** A lubricating oil composition comprising:

- from 0.5 wt% to 15 wt%, based on the total weight of the lubricating oil composition of at least one propylene-based polymer comprising 84.5 wt% to 88 wt% propylene derived units and 15.5 wt% to 12 wt% units derived from ethylene, the propylene-based polymer having:

  - a triad tacticity of 90% or more, determined by $^{13}C$-NMR,
  - a heat of fusion of less than 80 J/g, determined as described in the description,
  - a weight average molecular weight (Mw) as measured by GPC of from 120,000 to 250,000, and
  - a MWD of 2.0 to 2.5;

- 60 wt% to 98 wt%, based on the total weight of the lubricating oil composition, of a base oil;
- 0.1 wt% to 20 wt%, based on the total weight of the lubricating oil composition, of one or more dispersants; and
- 0.1 wt% to 10 wt%, based on the total weight of the lubricating oil composition, of one or more pour point depressants.

**2.** The lubricating oil composition according to claim 1, wherein the oil composition has a thickening efficiency of 1.5 to 2.5, wherein the thickening efficiency is defined as:

$$TE = 2/c \times \ln((\text{kv of polymer} + \text{oil})/(\text{kv of oil}))/\ln(2)$$

where c is the concentration of the propylene-based polymer.

**3.** The lubricating oil composition according to claim 1 or 2, wherein the lubricating oil composition has a Shear Stability Index (SSI) from 20 to 60, measured as defined in the description.

**4.** The lubricating oil composition according to claim 1 or 2, wherein the lubricating oil composition has a Shear Stability Index (SSI) from 20 to 50, measured as defined in the description.

**5.** A method for preparing a lubricating oil composition of any of the preceding claims, the method comprising combining (i) the propylene-based polymer according to any of the preceding claims with (ii) the base oil.

## Patentansprüche

1. Schmierölzusammensetzung umfassend:

- von 0,5 Gew.-% bis 15 Gew.-%, bezogen auf das Gesamtgewicht der Schmierölzusammensetzung, an wenigstens einem Polymer auf Propylenbasis, das 84,5 Gew.-% bis 88 Gew.-% Propylen-abgeleitete Einheiten und 15,5 Gew.-% bis 12 Gew.-% Ethylen-abgeleitete Einheiten umfasst, wobei das Polymer auf Propylenbasis aufweist:

  - eine Triaden-Taktizität von 90 % oder mehr, bestimmt durch 13C-NMR,
  - eine Schmelzwärme von weniger als 80 J/g, bestimmt wie in der Beschreibung beschrieben,
  - ein gewichtsmittleres Molekulargewicht (Mw), gemessen durch GPC, von 120.000 bis 250.000, und
  - eine MWD von 2,0 bis 2,5;
  - 60 Gew.-% bis 98 Gew.-%, bezogen auf das Gesamtgewicht der Schmierölzusammensetzung, an einem Grundöl;
  - 0,1 Gew.-% bis 20 Gew.-%, bezogen auf das Gesamtgewicht der Schmierölzusammensetzung, an einem oder mehreren Dispergiermitteln; und
  - 0,1 Gew.-% bis 10 Gew.-%, bezogen auf das Gesamtgewicht der Schmierölzusammensetzung, an einem oder mehreren Pourpoint-Senkern.

2. Schmierölzusammensetzung nach Anspruch 1, wobei die Ölzusammensetzung eine Verdickungswirkung von 1,5 bis 2,5 aufweist, wobei die Verdickungswirkung definiert ist als:

$$TE = 2/c \times 1n((kv\ Polymer + Öl)/(kv\ Öl))/1n(2)$$

wobei c die Konzentration des Polymers auf Propylenbasis ist.

3. Schmierölzusammensetzung nach Anspruch 1 oder 2, wobei die Schmierölzusammensetzung einen Scherstabilitätsindex (SSI) von 20 bis 60, gemessen wie in der Beschreibung definiert, aufweist.

4. Schmierölzusammensetzung nach Anspruch 1 oder 2, wobei die Schmierölzusammensetzung einen Scherstabilitätsindex (SSI) von 20 bis 50, gemessen wie in der Beschreibung definiert, aufweist.

5. Verfahren zur Herstellung einer Schmierölzusammensetzung nach einem der vorstehenden Ansprüche, wobei das Verfahren Kombinieren (i) des Polymers auf Propylenbasis nach einem der vorstehenden Ansprüche mit (ii) dem Grundöl umfasst.

## Revendications

1. Composition d’huile lubrifiante comprenant :

- de 0,5 % en poids à 15 % en poids, sur la base du poids total de la composition d’huile lubrifiante, d’au moins un polymère à base de propylène comprenant 84,5 à 88 % en poids de motifs dérivés du propylène et 15,5 à 12 % en poids de motifs dérivés de l’éthylène, le polymère à base de propylène ayant :

  - une tacticité à la triade de 90 % ou plus, déterminée par RMN 13C,
  - une enthalpie de fusion inférieure à 80 J/g, déterminée comme décrit dans la description,
  - une masse moléculaire moyenne en poids (Mw) comme mesuré par CPG de 120 000 à 250 000, et
  - une MWD de 2,0 à 2,5 ;
  - 60 % en poids à 98 % en poids, sur la base du poids total de la composition d’huile lubrifiante, d’une huile de base ;
  - 0,1 % en poids à 20 % en poids, par rapport au poids total de la composition d’huile lubrifiante, d’un ou de plusieurs agents dispersants ; et
  - 0,1 % en poids à 10 % en poids, sur la base du poids total de la composition d’huile lubrifiante, d’un ou plusieurs agents abaisseurs de point d’écoulement.

**2.** Composition d'huile lubrifiante selon la revendication 1, dans laquelle la composition d'huile a une efficacité épaississante de 1,5 à 2,5, dans laquelle l'efficacité épaississante est définie comme étant :

$$TE = 2/c \times \ln((\text{kv de polymère + huile})/(\text{kv d'huile}))/\ln(2)$$

où c est la concentration du polymère à base de propylène.

**3.** Composition d'huile lubrifiante selon la revendication 1 ou 2, dans laquelle la composition d'huile lubrifiante a un indice de stabilité au cisaillement (SSI) de 20 à 60, mesuré comme défini dans la description.

**4.** Composition d'huile lubrifiante selon la revendication 1 ou 2, dans laquelle la composition d'huile lubrifiante a un indice de stabilité au cisaillement (SSI) de 20 à 50, mesuré comme défini dans la description.

**5.** Procédé de préparation d'une composition d'huile lubrifiante selon l'une quelconque des revendications précédentes, le procédé comprenant la combinaison (i) du polymère à base de propylène selon l'une quelconque des revendications précédentes avec (ii) l'huile de base.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6589920 B
- US 5391617 A
- US 7053153 B
- US 5374700 A
- EP 0638611 A
- US 2004210013 A
- US 20040236042 A
- WO 2005049672 A
- US 6881800 B
- WO 2003040201 A
- US 6559262 B
- EP 1070087 A
- EP 1614699 A
- US 4540753 A
- US 6525157 B
- US 5504172 A
- WO 0236651 A
- WO 2003040202 A
- WO 2003040095 A
- WO 2003040233 A
- WO 2003040442 A
- EP 1233191 A
- US 6770713 B
- US 2005215964
- EP 1017729 A
- US 1969324 A
- US 5068047 A
- US 3933659 A
- US 4176074 A
- US 4105571 A
- US 3779928 A
- US 3778375 A
- US 3852205 A
- US 3879306 A
- US 3932290 A
- US 4028258 A
- US 4344853 A


### Non-patent literature cited in the description


- **VERSTRATE**. *Macromolecules*, 1988, vol. 21, 3360
- **DIXON**. *Biometrics*, 01 March 1953, vol. 9, 74-89
- *Polymer*, 1989, vol. 30, 1350
- **CARMAN et al.** *Rubber Chemistry and Technology*, 1971, vol. 44, 781
- **K. SOGA** ; **T. SHIONO** ; **S. TAKEMURA** ; **W. KAMINSKI**. *Macromolecular Chemistry Rapid Communication*, 1987, vol. 8, 305